# EUROPEAN PATENT APPLICATION

(11) **EP 3 846 578 A1**
(43) Date of publication of application: **07.07.2021**
(21) Application number: 19867870.8
(22) Date of filing: 26.09.2019
(51) Int. Cl.: H04W 84/00

(54) **METHOD AND DEVICE FOR DELETING CELL**

(30) Priority: 27.09.2018 CN 201811134372
(71) Applicant: HUAWEI TECHNOLOGIES CO., LTD., Shenzhen, Guangdong 518129 (CN)
(72) Inventor: XU, Ruiyue, Shenzhen, Guangdong 518129 (CN); GAN, Quan, Shenzhen, Guangdong 518129 (CN)
(74) Representative: Gill Jennings & Every LLP
(86) International application number: PCT/CN2019/108300
(87) International publication number: WO 2020/063789

(57) **Abstract**

This application discloses a cell deletion method and apparatus, to increase cell deletion efficiency. The method specifically includes: receiving, by a first base station management unit, a first message, where the first message carries cell information, and the cell information includes an identifier of a cell or an identifier of a managed object of the cell; deleting, by the first base station management unit, the cell based on the first message; and deleting, by the first base station management unit based on the first message, a neighbor relation and/or an external cell that are/is associated with the cell and that are/is managed by the first base station management unit. This application relates to the field of communications technologies.

## Description

This application claims priority to Chinese Patent Application No. 201811134372.8, filed with the China National Intellectual Property Administration on September 27, 2018 and entitled "CELL DELETION METHOD AND APPARATUS", which is incorporated herein by reference in its entirety.

### TECHNICAL FIELD

This application relates to the field of communications technologies, and in particular, to a cell deletion method and apparatus.

### BACKGROUND

With introduction of a vertical industry, a quantity of terminals increases, and a quantity of base stations in a communications network also increases. Each base station may support a plurality of cells. Consequently, management of the base station and the cell and a neighbor relation between cells are complex, and cell deletion becomes more difficult. Currently, an operator device indicates different vendor devices to delete a cell to achieve an objective of cell deletion. In this manner, lots of interaction between the operator device and the vendor devices is required, resulting in low cell deletion efficiency.

### SUMMARY

Embodiments of this application provide a cell deletion method and apparatus, to increase cell deletion efficiency.

To achieve the foregoing objective, the embodiments of this application provide the following technical solutions:

According to a first aspect, a cell deletion method is provided. The method includes: A first base station management unit receives a first message, where the first message carries cell information, and the cell information includes an identifier of a cell or an identifier of a managed object of the cell. The first base station management unit deletes the cell based on the first message. The first base station management unit deletes, based on the first message, a neighbor relation and/or an external cell that are/is associated with the cell and that are/is managed by the first base station management unit. According to the method provided in the first aspect, after receiving the first message, a vendor device (for example, the first base station management unit) may delete the cell and the neighbor relation and/or the external cell that are/is associated with the cell. Compared with the prior art, an operator device does not need to send a plurality of messages (for example, a message for deleting the cell, a message for deleting a neighbor relation of the cell, a message for deleting a neighbor relation that points to the cell, and a message for deleting an external cell pointed to by the neighbor relation of the cell) to the vendor device. This can reduce interaction between the operator device and the vendor device, and increase cell deletion efficiency. With reference to the first aspect, in a first possible implementation, the first message further carries first indication information, and the first indication information is used to indicate to delete the neighbor relation and/or the external cell that are/is associated with the cell. In this possible implementation, the first base station management unit may delete, under an indication of the first indication information, the managed neighbor relation and/or the managed external cell that are/is associated with the cell.

With reference to the first aspect or the first possible implementation of the first aspect, in a second possible implementation, the neighbor relation that is associated with the cell and that is managed by the first base station management unit includes a neighbor relation that is of the cell and that is managed by the first base station management unit and/or a neighbor relation that points to the cell and that is managed by the first base station management unit. The external cell that is associated with the cell and that is managed by the first base station management unit includes an external cell pointed to by the neighbor relation that is of the cell and that is managed by the first base station management unit.

With reference to the first aspect, the first possible implementation of the first aspect, or the second possible implementation of the first aspect, in a third possible implementation, the neighbor relation that is associated with the cell and that is managed by the first base station management unit includes a neighbor relation that points to the cell and that is managed by the first base station management unit. That the first base station management unit deletes, based on the first message, a neighbor relation that is associated with the cell and that is managed by the first base station management unit includes: The first base station management unit deletes, based on the first message, cell information that is of a neighbor cell of the cell and that is managed by the first base station management unit. In this possible implementation, a method for deleting, by a first base station management unit, a managed neighbor relation that points to a cell is provided.

With reference to any one of the first aspect, or the first possible implementation to the third possible implementation of the first aspect, in a fourth possible implementation, the method further includes: The first base station management unit sends a second message to a second base station management unit. The second message carries the cell information, and the second message is used to notify the second base station management unit to delete a neighbor relation and/or an external cell that are/is associated with the cell and that are/is managed by the second base station management unit. In this possible implementation, the first base station management unit sends the second message to the second base station management unit, so that a neighbor relation and/or an external cell that are/is associated with the cell and that are/is managed by another base station management unit are/is also deleted. This fully releases resources.

With reference to the fourth possible implementation of the first aspect, in a fifth possible implementation, the second message further carries second indication information, and the second indication information is used to indicate to delete the neighbor relation and/or the external cell that are/is associated with the cell. In this possible implementation, the second base station management unit may delete, under an indication of the second indication information, the managed neighbor relation and/or the managed external cell that are/is associated with the cell.

With reference to the fourth possible implementation or the fifth possible implementation of the first aspect, in a sixth possible implementation, the neighbor relation that is associated with the cell and that is managed by the second base station management unit includes a neighbor relation that points to the cell and that is managed by the second base station management unit. The external cell that is associated with the cell and that is managed by the second base station management unit includes an external cell that points to the cell and that is managed by the second base station management unit.

With reference to any one of the first aspect, or the first possible implementation to the sixth possible implementation of the first aspect, in a seventh possible implementation, the cell information further includes an identifier of a base station to which the cell belongs or an identifier of a managed object of the base station to which the cell belongs. In this possible implementation, the first base station management unit may be enabled to more accurately determine the cell.

With reference to any one of the first aspect, or the first possible implementation to the seventh possible implementation of the first aspect, in an eighth possible implementation, the method further includes: The first base station management unit sends a third message, where the third message carries third indication information, and the third indication information is used to indicate that the neighbor relation and/or the external cell that are/is associated with the cell are/is deleted. In this possible implementation, a device sending the first message may be enabled to learn of a cell deletion status.

According to a second aspect, a cell deletion apparatus is provided. The apparatus has a function of implementing any method provided in the first aspect. The function may be implemented by hardware, or may be implemented by hardware by executing corresponding software. The hardware or the software includes one or more units corresponding to the foregoing function. The apparatus may exist in a product form of a chip.

According to a third aspect, a cell deletion apparatus is provided, including a memory and a processor. The memory and the processor are connected through a communications bus, the memory is configured to store instructions, and the processor executes the instructions to implement any method provided in the first aspect. The apparatus may exist in a product form of a chip.

According to a fourth aspect, a cell deletion apparatus is provided, including at least one processor and an interface circuit. The at least one processor is configured to communicate with a second base station management unit by using the interface circuit, to perform any method provided in the first aspect. The apparatus may exist in a product form of a chip.

According to a fifth aspect, a cell deletion method is provided. The method includes: A second base station management unit receives a second message from a first base station management unit, where the second message carries cell information, and the cell information includes an identifier of a cell or an identifier of a managed object of the cell. The second base station management unit deletes, based on the second message, a neighbor relation and/or an external cell that are/is associated with the cell and that are/is managed by the second base station management unit. According to the method provided in the fifth aspect, the first base station management unit sends the second message to the second base station management unit, so that a neighbor relation and/or an external cell that are/is associated with the cell and that are/is managed by another base station management unit are/is also deleted. This fully releases resources.

With reference to the fifth aspect, in a first possible implementation, the second message further carries second indication information, and the second indication information is used to indicate to delete the neighbor relation and/or the external cell that are/is associated with the cell. In this possible implementation, the second base station management unit may delete, under an indication of the second indication information, the managed neighbor relation and/or the managed external cell that are/is associated with the cell.

With reference to the fifth aspect or the first possible implementation of the fifth aspect, in a second possible implementation, that the second base station management unit deletes, based on the second message, a neighbor relation and/or an external cell that are/is associated with the cell and that are/is managed by the second base station management unit includes: The second base station management unit deletes, based on the second message, a neighbor relation that points to the cell and that is managed by the second base station management unit; and/or the second base station management unit deletes, based on the second message, an external cell that points to the cell and that is managed by the second base station management unit.

With reference to the second possible implementation of the fifth aspect, in a third possible implementation, the second base station management unit deletes, based on the second message, a neighbor relation that points to the cell and that is managed by the second base station management unit includes: The second base station management unit deletes, based on the second message, cell information that is of a neighbor cell of the cell and that is managed by the second base station management unit. In this possible implementation, a method for deleting, by a second base station management unit, a managed neighbor relation that points to a cell is provided.

With reference to any one of the fifth aspect, or the first possible implementation to the third possible implementation of the fifth aspect, in a fourth possible implementation, the cell information further includes an identifier of a base station to which the cell belongs or an identifier of a managed object of the base station to which the cell belongs. In this possible implementation, the second base station management unit may be enabled to more accurately determine the cell.

According to a sixth aspect, a cell deletion apparatus is provided. The apparatus has a function of implementing any method provided in the second aspect. The function may be implemented by hardware, or may be implemented by hardware by executing corresponding software. The hardware or the software includes one or more units corresponding to the foregoing function. The apparatus may exist in a product form of a chip.

According to a seventh aspect, a cell deletion apparatus is provided, including a memory and a processor. The memory and the processor are connected through a communications bus, the memory is configured to store instructions, and the processor executes the instructions to implement any method provided in the second aspect. The apparatus may exist in a product form of a chip.

According to an eighth aspect, a cell deletion apparatus is provided, including at least one processor and an interface circuit. The at least one processor is configured to communicate with a first base station management unit by using the interface circuit, to perform any method provided in the second aspect. The apparatus may exist in a product form of a chip.

According to a ninth aspect, a neighbor relation deletion method is provided. The method includes: A first base station management unit receives a first message, where the first message carries target neighbor relation information. The target neighbor relation information is used to indicate a target neighbor relation, the target neighbor relation is used to indicate a neighbor relation between a first cell and a second cell, and the target neighbor relation is a neighbor relation of the first cell. The first base station management unit deletes the target neighbor relation based on the first message. The first base station management unit deletes, based on the first message, a neighbor relation and/or an external cell that are/is associated with the target neighbor relation and that are/is managed by the first base station management unit. According to the method provided in the ninth aspect, after receiving the first message, a vendor device (for example, the first base station management unit) may delete the target neighbor relation and the neighbor relation and/or the external cell that are/is associated with the target neighbor relation. Compared with the prior art, an operator device does not need to send a plurality of messages (for example, a message for deleting the target neighbor relation and a message for deleting a first neighbor relation of the second cell) to the vendor device. This can reduce interaction between the operator device and the vendor device, and increase neighbor relation deletion efficiency.

With reference to the ninth aspect, in a first possible implementation, that the first base station management unit deletes the target neighbor relation based on the first message includes: The first base station management unit deletes second cell information of the first cell based on the first message. In this possible implementation, a method for deleting a target neighbor relation by a first base station management unit is provided.

With reference to the ninth aspect or the first possible implementation of the ninth aspect, in a second possible implementation, the first message further carries first indication information, and the first indication information is used to indicate to delete the neighbor relation and/or the external cell that are/is associated with the target neighbor relation. In this possible implementation, the first base station management unit may delete, under an indication of the first indication information, the managed neighbor relation and/or the managed external cell that are/is associated with the target neighbor relation.

With reference to the ninth aspect, the first possible implementation of the ninth aspect, or the second possible implementation of the ninth aspect, in a third possible implementation, the neighbor relation that is associated with the target neighbor relation and that is managed by the first base station management unit includes a first neighbor relation that is of the second cell and that is managed by the first base station management unit. The first neighbor relation is a neighbor relation that points to the first cell. The external cell that is associated with the target neighbor relation and that is managed by the first base station management unit includes an external cell that points to the second cell and that is managed by the first base station management unit, and/or an external cell that points to the first cell and that is managed by the first base station management unit.

With reference to any one of the ninth aspect, or the first possible implementation to the third possible implementation of the ninth aspect, in a fourth possible implementation, the method further includes: The first base station management unit sends a second message to a second base station management unit. The second message carries the target neighbor relation information, and the second message is used to notify the second base station management unit to delete the neighbor relation and/or the external cell that are/is associated with the target neighbor relation and that are/is managed by the second base station management unit. In this possible implementation, the first base station management unit sends the second message to the second base station management unit, so that a neighbor relation and/or an external cell that are/is associated with the target neighbor relation and that are/is managed by another base station management unit are/is also deleted. This fully releases resources.

With reference to the fourth possible implementation of the ninth aspect, in a fifth possible implementation, the second message further carries second indication information, and the second indication information is used to indicate to delete the neighbor relation and/or the external cell that are/is associated with the target neighbor relation. In this possible implementation, the second base station management unit may delete, under an indication of the second indication information, the managed neighbor relation and/or the managed external cell that are/is associated with the target neighbor relation.

With reference to the fourth possible implementation or the fifth possible implementation of the ninth aspect, in a sixth possible implementation, the neighbor relation that is associated with the target neighbor relation and that is managed by the second base station management unit includes a first neighbor relation that is of the second cell and that is managed by the second base station management unit. The first neighbor relation is a neighbor relation that points to the first cell. The external cell that is associated with the target neighbor relation and that is managed by the second base station management unit includes an external cell that points to the first cell and that is managed by the second base station management unit.

With reference to any one of the ninth aspect, or the first possible implementation to the sixth possible implementation of the ninth aspect, in a seventh possible implementation, the target neighbor relation information includes information used to indicate the first cell and information used to indicate the second cell, or the target neighbor relation information includes an identifier of the target neighbor relation.

With reference to the seventh possible implementation of the ninth aspect, in an eighth possible implementation, when the target neighbor relation information includes the identifier of the target neighbor relation, the target neighbor relation information further includes the information used to indicate the first cell and/or information used to indicate a base station to which the first cell belongs. In this possible implementation, the first base station management unit may be enabled to more accurately determine the first cell.

With reference to any one of the ninth aspect, or the first possible implementation to the eighth possible implementation of the ninth aspect, in a ninth possible implementation, the method further includes: The first base station management unit sends a third message, where the third message carries third indication information, and the third indication information is used to indicate that the neighbor relation and/or the external cell that are/is associated with the target neighbor relation are/is deleted. In this possible implementation, a device sending the first message may be enabled to learn of a target neighbor relation deletion status.

According to a tenth aspect, a neighbor relation deletion apparatus is provided, including a communications unit and a processing unit. The communications unit is configured to receive a first message, where the first message carries target neighbor relation information. The target neighbor relation information is used to indicate a target neighbor relation, the target neighbor relation is used to indicate a neighbor relation between a first cell and a second cell, and the target neighbor relation is a neighbor relation of the first cell. The processing unit is configured to delete the target neighbor relation based on the first message. The processing unit is further configured to delete, based on the first message, a neighbor relation and/or an external cell that are/is associated with the target neighbor relation and that are/is managed by the apparatus.

With reference to the tenth aspect, in a first possible implementation, the processing unit is specifically configured to delete second cell information of the first cell based on the first message.

With reference to the tenth aspect or the first possible implementation of the tenth aspect, in a second possible implementation, the first message further carries first indication information, and the first indication information is used to indicate to delete the neighbor relation and/or the external cell that are/is associated with the target neighbor relation.

With reference to the tenth aspect, the first possible implementation of the tenth aspect, or the second possible implementation of the tenth aspect, in a third possible implementation, the neighbor relation that is associated with the target neighbor relation and that is managed by the apparatus includes a first neighbor relation that is of the second cell and that is managed by the apparatus. The first neighbor relation is a neighbor relation that points to the first cell. The external cell that is associated with the target neighbor relation and that is managed by the apparatus includes an external cell that points to the second cell and that is managed by the apparatus, and/or an external cell that points to the first cell and that is managed by the apparatus.

With reference to any one of the tenth aspect, or the first possible implementation to the third possible implementation of the tenth aspect, in a fourth possible implementation, the apparatus further includes: the communications unit is further configured to send a second message to a second base station management unit. The second message carries the target neighbor relation information, and the second message is used to notify the second base station management unit to delete a neighbor relation and/or an external cell that are/is associated with the target neighbor relation and that are/is managed by the second base station management unit.

With reference to the fourth possible implementation of the tenth aspect, in a fifth possible implementation, the second message further carries second indication information, and the second indication information is used to indicate to delete the neighbor relation and/or the external cell that are/is associated with the target neighbor relation.

With reference to the fourth possible implementation or the fifth possible implementation of the tenth aspect, in a sixth possible implementation, the neighbor relation that is associated with the target neighbor relation and that is managed by the second base station management unit includes a first neighbor relation that is of the second cell and that is managed by the second base station management unit. The first neighbor relation is a neighbor relation that points to the first cell. The external cell that is associated with the target neighbor relation and that is managed by the second base station management unit includes an external cell that points to the first cell and that is managed by the second base station management unit.

With reference to any one of the tenth aspect, or the first possible implementation to the sixth possible implementation of the tenth aspect, in a seventh possible implementation, the target neighbor relation information includes information used to indicate the first cell and information used to indicate the second cell, or the target neighbor relation information includes an identifier of the target neighbor relation.

With reference to the seventh possible implementation of the tenth aspect, in an eighth possible implementation, when the target neighbor relation information includes the identifier of the target neighbor relation, the target neighbor relation information further includes the information used to indicate the first cell and/or information used to indicate a base station to which the first cell belongs.

With reference to any one of the tenth aspect, or the first possible implementation to the eighth possible implementation of the tenth aspect, in a ninth possible implementation, the apparatus further includes: the communications unit is further configured to send a third message, where the third message carries third indication information, and the third indication information is used to indicate that the neighbor relation and/or the external cell that are/is associated with the target neighbor relation are/is deleted.

According to an eleventh aspect, a neighbor relation deletion apparatus is provided, including a memory and a processor. The memory and the processor are connected through a communications bus, the memory is configured to store instructions, and the processor executes the instructions to implement any method provided in the ninth aspect. The apparatus may exist in a product form of a chip.

According to a twelfth aspect, a neighbor relation deletion apparatus is provided, including at least one processor and an interface circuit. The at least one processor is configured to communicate with a second base station management unit by using the interface circuit, to perform any method provided in the ninth aspect. The apparatus may exist in a product form of a chip.

According to a thirteenth aspect, a neighbor relation deletion method is provided. The method includes: A second base station management unit receives a second message from a first base station management unit, where the second message carries target neighbor relation information. The target neighbor relation information is used to indicate a target neighbor relation, the target neighbor relation is used to indicate a neighbor relation between a first cell and a second cell, and the target neighbor relation is a neighbor relation of the first cell. The second base station management unit deletes, based on the second message, a neighbor relation and/or an external cell that are/is associated with the target neighbor relation and that are/is managed by the second base station management unit. According to the method provided in the thirteenth aspect, the first base station management unit sends the second message to the second base station management unit, so that a neighbor relation and/or an external cell that are/is associated with the target neighbor relation and that are/is managed by another base station management unit are also deleted. This fully releases resources.

With reference to the thirteenth aspect, in a first possible implementation, the second message further carries second indication information, and the second indication information is used to indicate to delete the neighbor relation and/or the external cell that are/is associated with the target neighbor relation. In this possible implementation, the second base station management unit may delete, under an indication of the second indication information, the managed neighbor relation and/or the managed external cell that are/is associated with the target neighbor relation.

With reference to the thirteenth aspect or the first possible implementation of the thirteenth aspect, in a second possible implementation, that the second base station management unit deletes, based on the second message, a neighbor relation and/or an external cell that are/is associated with the target neighbor relation and that are/is managed by the second base station management unit includes: The second base station management unit deletes, based on the second message, a first neighbor relation that is of the second cell and that is managed by the second base station management unit, where the first neighbor relation is a neighbor relation that points to the first cell; and/or the second base station management unit deletes, based on the second message, an external cell that points to the first cell and that is managed by the second base station management unit.

With reference to the thirteenth aspect, the first possible implementation or the second possible implementation of the thirteenth aspect, in a third possible implementation, the target neighbor relation information includes information used to indicate the first cell and information used to indicate the second cell, or the target neighbor relation information includes an identifier of the target neighbor relation.

With reference to the third possible implementation of the thirteenth aspect, in a fourth possible implementation, when the target neighbor relation information includes the identifier of the target neighbor relation, the target neighbor relation information further includes the information used to indicate the first cell and/or information used to indicate a base station to which the first cell belongs. In this possible implementation, the first base station management unit may be enabled to more accurately determine the first cell.

According to a fourteenth aspect, a neighbor relation deletion apparatus is provided, including a communications unit and a processing unit. The communications unit is configured to receive a second message from a first base station management unit, where the second message carries target neighbor relation information. The target neighbor relation information is used to indicate a target neighbor relation, the target neighbor relation is used to indicate a neighbor relation between a first cell and a second cell, and the target neighbor relation is a neighbor relation of the first cell. The processing unit is configured to delete, based on the second message, a neighbor relation and/or an external cell that are/is associated with the target neighbor relation and that are/is managed by the apparatus.

With reference to the fourteenth aspect, in a first possible implementation, the second message further carries second indication information, and the second indication information is used to indicate to delete the neighbor relation and/or the external cell that are/is associated with the target neighbor relation.

With reference to the fourteenth aspect or the first possible implementation of the fourteenth aspect, in a second possible implementation, the processing unit is specifically configured to delete, based on the second message, a first neighbor relation that is of the second cell and that is managed by the apparatus, where the first neighbor relation is a neighbor relation that points to the first cell; and/or delete, based on the second message, an external cell that points to the first cell and that is managed by the apparatus.

With reference to the fourteenth aspect, the first possible implementation or the second possible implementation of the fourteenth aspect, in a third possible implementation, the target neighbor relation information includes information used to indicate the first cell and information used to indicate the second cell, or the target neighbor relation information includes an identifier of the target neighbor relation.

With reference to the third possible implementation of the fourteenth aspect, in a fourth possible implementation, when the target neighbor relation information includes the identifier of the target neighbor relation, the target neighbor relation information further includes the information used to indicate the first cell and/or information used to indicate a base station to which the first cell belongs.

According to a fifteenth aspect, a neighbor relation deletion apparatus is provided, including a memory and a processor. The memory and the processor are connected through a communications bus, the memory is configured to store instructions, and the processor executes the instructions to implement any method provided in the thirteenth aspect. The apparatus may exist in a product form of a chip.

According to a sixteenth aspect, a neighbor relation deletion apparatus is provided, including at least one processor and an interface circuit. The at least one processor is configured to communicate with a first base station management unit by using the interface circuit, to perform any method provided in the thirteenth aspect. The apparatus may exist in a product form of a chip.

According to a seventeenth aspect, a first base station management unit is provided, including any one of the apparatuses provided in the second aspect, the third aspect, the fourth aspect, the tenth aspect, the eleventh aspect, and the twelfth aspect.

According to an eighteenth aspect, a second base station management unit is provided, including any one of the apparatuses provided in the sixth aspect, the seventh aspect, the eighth aspect, the fourteenth aspect, the fifteenth aspect, and the sixteenth aspect.

According to a nineteenth aspect, a communications system is provided, including the apparatus provided in the second aspect and the apparatus provided in the sixth aspect, the apparatus provided in the third aspect and the apparatus provided in the seventh aspect, the apparatus provided in the fourth aspect and the apparatus provided in the eighth aspect, the apparatus provided in the tenth aspect and the apparatus provided in the fourteenth aspect, the apparatus provided in the eleventh aspect and the apparatus provided in the fifteenth aspect, the apparatus provided in the twelfth aspect and the apparatus provided in the sixteenth aspect, or the first base station management unit provided in the seventeenth aspect and the second base station management unit provided in the eighteenth aspect.

According to a twentieth aspect, a computer storage medium is provided, including computer instructions. When the computer instructions are run on a processor, the processor is enabled to perform any method provided in the first aspect, the fifth aspect, the ninth aspect, or the thirteenth aspect.

According to a twenty-first aspect, a computer program product including instructions is provided. When the instructions are run on a processor, the processor is enabled to perform any method provided in the first aspect, the fifth aspect, the ninth aspect, or the thirteenth aspect.

For technical effects brought by any one of the implementations of the second aspect to the fourth aspect, the sixth aspect to the eighth aspect, the tenth aspect to the twelfth aspect, the fourteenth aspect to the sixteenth aspect, the twentieth aspect, and the twenty-first aspect, refer to technical effects brought by corresponding implementations of the first aspect, the fifth aspect, the ninth aspect, or the thirteenth aspect. Details are not described herein again.

### BRIEF DESCRIPTION OF DRAWINGS

FIG. 1 is a schematic diagram of neighbor cells;
FIG. 2 is a schematic composition diagram of a network architecture;
FIG. 3 is a schematic structural diagram of hardware of a communications apparatus according to an embodiment of this application;
FIG. 4 is a flowchart of a cell deletion method according to an embodiment of this application;
FIG. 5 is a schematic diagram of cell deletion according to an embodiment of this application;
FIG. 6 is a flowchart of still another cell deletion method according to an embodiment of this application;
FIG. 7 is a flowchart of a neighbor relation deletion method according to an embodiment of this application;
FIG. 8 is a schematic diagram of neighbor relation deletion according to an embodiment of this application;
FIG. 9 is a flowchart of still another neighbor relation deletion method according to an embodiment of this application; and
FIG. 10 is a schematic composition diagram of a communications apparatus according to an embodiment of this application.

### DESCRIPTION OF EMBODIMENTS

The following describes the technical solutions in the embodiments of this application with reference to accompanying drawings in the embodiments of this application. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of' means two or more.

To make the embodiments of this application clearer, some concepts in the embodiments of this application are first briefly described.

A cell (Cell) is also referred to as a cellular cell, and refers to an area covered by an access network device or some antennas of the access network device in a cellular mobile communications system. In this area, a terminal may reliably communicate with the access network device through a wireless channel. The access network device in the embodiments of this application may be a base station, a relay node (relay node, RN for short), an integrated access and backhaul (integrated access and backhaul, IAB for short) node, or the like. The following uses an example in which the access network device is the base station to describe a method provided in the embodiments of this application. In other words, the base station below may be replaced with the access network device.

Neighbor cells (Neighbor Cell) are two cells that have overlapping coverage and a handover relationship. One cell may be adjacent to a plurality of cells. In a movement state, a terminal may perform a smooth handover of a service between the neighbor cells, to ensure that an ongoing service is not interrupted.

An external cell (External Cell) refers to information in a base station. The information is used to describe a cell that is covered by another base station and that is adjacent to a cell of the base station, and the information may be used when a terminal performs cell handover. The another base station and the base station may be managed by one base station management unit, or may be managed by different base station management units.

A neighbor relation (Cell Relation) refers to information used to indicate that two cells are neighbor cells. One of the two cells is a source cell, and the other cell is a target cell. The neighbor relation is included in the source cell. In other words, the neighbor relation is a neighbor relation of the source cell.

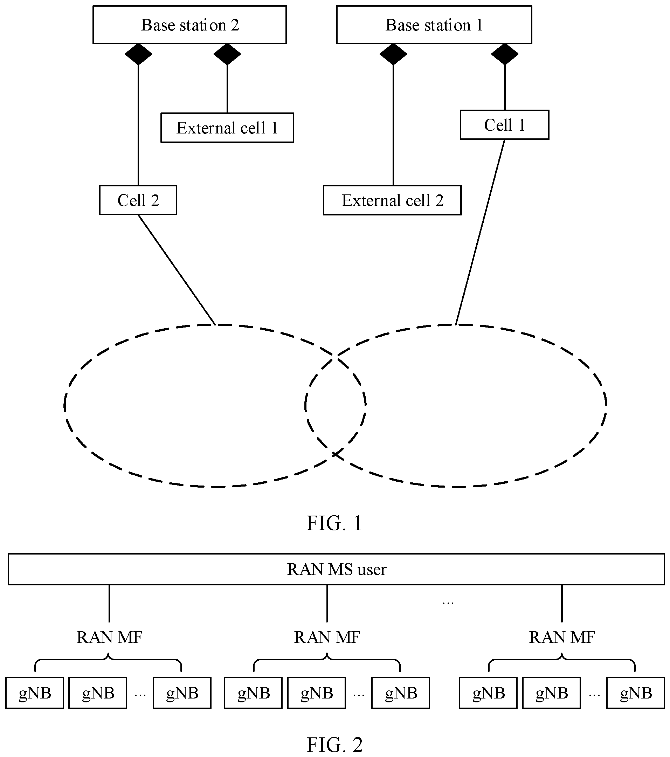

For example, as shown in FIG. 1, a cell 1 and a cell 2 are neighbor cells. An external cell 2 is an external cell of a base station 1, the external cell 2 is used to describe the cell 2, and the external cell 2 may include information that needs to be used when the terminal performs cell handover, for example, an identifier of the cell 2, a frequency of the cell 2, and an identifier of a base station 2. An external cell 1 is an external cell of the base station 2, the external cell 1 is used to describe the cell 1, and the external cell 1 may include information that needs to be used when the terminal performs cell handover, for example, an identifier of the cell 1, a frequency of the cell 1, and an identifier of the base station 1.

To make the embodiments of this application clearer, some descriptions in the embodiments of this application are briefly described herein.

A neighbor relation of a cell C may also be described as "a neighbor relation in which a source cell is the cell C". The neighbor relation of the cell C is information used to indicate that the cell C and another cell are neighbor cells. There may be one or more neighbor relations of the cell C.

A neighbor relation that points to the cell C may also be described as "a neighbor relation in which a target cell is the cell C". The neighbor relation that points to the cell C is information used to indicate that another cell and the cell C are neighbor cells. There may be one or more neighbor relations that point to the cell C.

An external cell pointed to by the neighbor relation of the cell C may also be described as "an external cell used to describe a target cell in the neighbor relation of the cell C". Because there may be one or more neighbor relations of the cell C, there may also be one or more external cells pointed to by the neighbor relation of the cell C.

An external cell that points to the cell C may also be described as "an external cell used to describe the cell C". There may be one or more external cells that point to the cell C.

The technical solutions in the embodiments of this application may be used in various communications systems, for example, a global system for mobile communications (global system for mobile communication, GSM for short), an evolved universal terrestrial radio access (evolved universal terrestrial radio access, E-UTRA for short) system, a universal mobile telecommunications system (universal mobile telecommunications system, UMTS for short) and an evolved version of the UMTS, a long term evolution (long term evolution, LTE for short) communications system and various versions based on LTE evolution, a fifth generation (5th-generation, 5G for short) communications system, and a next generation communications system, for example, a new radio (new radio, NR for short) communications system. In addition, the communications systems are further applicable to a future-oriented communications technology, and are all applicable to the technical solutions provided in the embodiments of this application.

Network elements in this application include a radio access network management function (radio access network management function, RAN MF for short) and a radio access network management service (radio access network management service, RAN MS for short) user. The RAN MF mainly provides RAN management services, including a life cycle management service, a configuration management service, a fault management service, a performance management service, and the like. The RAN MS user may use the service provided by the RAN MF. The RAN MS user may be a RAN MF, or may be a network management function. The network management function may be a network slice management function or a network slice subnet management function.

FIG. 2 shows an example of a network architecture. A RAN MS user may use a service provided by one or more RAN MFs, and one RAN MF may manage a plurality of base stations (FIG. 2 uses an example in which the base station is a next generation NodeB (next generation NodeB, gNB for short) for drawing). The RAN MS user may be an operator device, the RAN MF may be a vendor device, and base stations managed by different RAN MFs may be base stations of different vendors.

The RAN MF may also be referred to as a radio management function, a base station management unit, a base station management function, or the like. The RAN MS user may also be referred to as a radio management service user, a base station management service user, or the like. In the following descriptions, the RAN MF is referred to as the base station management unit, and the RAN MS user is referred to as the base station management service user. For ease of description, in the following descriptions, a first base station management unit is denoted as a first RAN MF, a second base station management unit is denoted as a second RAN MF, and the base station management service user is denoted as the RAN MS user. In other words, in the following descriptions, the first RAN MF may be replaced with the first base station management unit, the second RAN MF may be replaced with the second base station management unit, and the RAN MS user may be replaced with the base station management service user.

An operator may delete a cell or a neighbor relation when determining to re-plan one or more cells. In a process of deleting the cell, a neighbor relation and/or an external cell that are/is associated with the cell also need/needs to be deleted. In a process of deleting the neighbor relation, a neighbor relation and/or an external cell that are/is associated with the neighbor relation also need/needs to be deleted.

In the prior art, the cell or the neighbor relation is deleted in a full configuration manner. In a process of deleting a cell, the operator device sends, to a corresponding vendor device, an indication for deleting the cell, an indication for deleting a neighbor relation associated with the cell, and an indication for deleting an external cell associated with the cell, to delete the cell. Similarly, in a process of deleting a neighbor relation, the operator device sends, to a corresponding vendor device, an indication for deleting the neighbor relation, an indication for deleting a neighbor relation associated with the neighbor relation, and an indication for deleting an external cell associated with the neighbor relation, to delete the neighbor relation. This method has the following problems:
(1) Lots of interaction between the operator device and the vendor device is required, resulting in low cell or neighbor relation deletion efficiency.
(2) The operator device needs to know neighboring information between all cells. Methods for describing neighboring information between cells in different vendor devices may be different. For example, a vendor device 1 indicates that a source cell and a target cell are neighbor cells by including target cell information in a managed object of the source cell; and a vendor device 2 indicates that a source cell and a target cell are neighbor cells by using an independent neighbor relation, and the neighbor relation may include information about the source cell and information about the target cell. Consequently, the operator device needs to spend a lot of efforts in deleting the neighbor relation in a cell deletion process.
(3) Workflows or operation logic for cell deletion or neighbor relation deletion varies with different vendor devices (for example, some vendor devices delete neighbor relations associated with cells or neighbor relations before deleting external cells associated with the cells or the neighbor relations; and some vendor devices delete external cells associated with cells or neighbor relations before deleting neighbor relations associated with the cells or the neighbor relations). The operator device needs to execute different operation logic based on the vendor devices, resulting in low cell deletion or neighbor relation deletion efficiency.

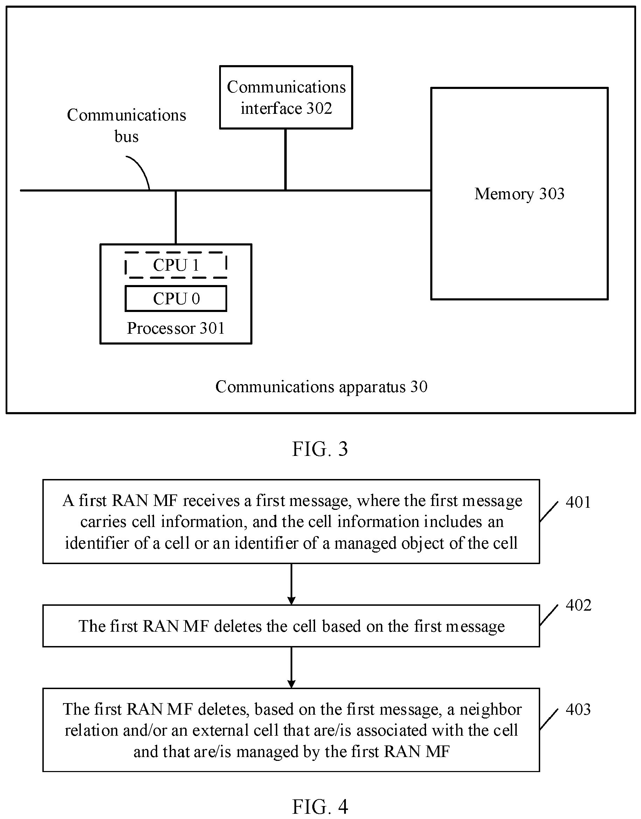

To avoid the foregoing problems, an embodiment of this application provides a schematic structural diagram of hardware of a communications apparatus 30. As shown in FIG. 3, the communications apparatus 30 may be a first RAN MF or a second RAN MF in the following descriptions. The communications apparatus 30 includes at least one processor 301 and at least one communications interface 302, and may further include a memory 303. In FIG. 3, an example in which the communications apparatus 30 includes one processor 301, the memory 303, and one communications interface 302 is used for drawing. The communications interface in this embodiment of this application may alternatively be replaced with a transceiver pin, a transceiver, or the like.

The communications interface 302, the processor 301, and the memory 303 communicate with each other through a communications bus. The processor 301 is configured to execute instructions to control the communications interface 302 to send or receive a signal. The memory 303 is configured to store the instructions. When executing the instructions, the processor 301 performs the method described below.

The processor 301 may be one or more general-purpose central processing units (central processing unit, CPU for short), microprocessors, application-specific integrated circuits (application-specific integrated circuit, ASIC for short), or one or more integrated circuits configured to control program execution of the solutions in this application. The processor 301 may be a single-core (single-CPU) processor, or may be a multi-core (multi-CPU) processor. The processor herein may refer to one or more devices, circuits, and/or processing cores configured to process data (for example, computer program instructions). In an embodiment, the processor 301 may include one or more CPUs, for example, a CPU 0 and a CPU 1 in FIG. 3.

The communications interface 302 is configured to communicate with another device or a communications network.

The memory 303 is configured to store computer-executable instructions for executing the solutions in this application, and the processor 301 controls the execution of the computer-executable instructions. The processor 301 is configured to execute the computer-executable instructions stored in the memory 303, to implement the method provided in the following embodiments of this application, for example, perform an action of the first RAN MF or the second RAN MF in the following descriptions. The memory 303 may be a read-only memory (read-only memory, ROM for short) or another type of static storage device capable of storing static information and instructions, a random access memory (random access memory, RAM for short) or another type of dynamic storage device capable of storing information and instructions, or may be an electrically erasable programmable read-only memory (electrically erasable programmable read-only memory, EEPROM for short), a compact disc read-only memory (compact disc read-only memory, CD-ROM for short) or another compact disc storage, an optical disc storage (including a compressed optical disc, a laser disc, an optical disc, a digital versatile disc, a blue-ray optical disc, and the like), a magnetic disk storage medium or another magnetic storage device, or any other medium that is capable of carrying or storing expected program code in a form of instructions or a data structure and that can be accessed by a computer, but this application is not limited thereto.

Optionally, the computer-executable instructions in this embodiment of this application may also be referred to as application program code. This is not specifically limited in this embodiment of this application.

The embodiments of this application provide a cell deletion method (referring to Embodiment 1) and a neighbor relation deletion method (referring to Embodiment 2). The following provides specific descriptions.

### Embodiment 1

This embodiment provides a cell deletion method. As shown in FIG. 4, the method includes the following steps.

401: A first RAN MF receives a first message, where the first message carries cell information, and the cell information includes an identifier of a cell or an identifier of a managed object of the cell.

The first message may also be referred to as a cell deletion message, a cell scenario-based configuration request, an intention-based cell deletion request, or the like.

The cell may be a cell managed by the first RAN MF. In some cases, the identifier of the cell or the identifier of the managed object of the cell may uniquely determine a cell. In other cases, the identifier of the cell or the identifier of the managed object of the cell cannot uniquely determine a cell. In this case, the cell information may further include an identifier of a base station to which the cell belongs or an identifier of a managed object of the base station to which the cell belongs.

In a specific implementation of step 401, the first RAN MF may receive the first message from a RAN MS user. In this case, before step 401, the method may further include: The RAN MS user sends the first message to the first RAN MF. Before sending the first message, the RAN MS user may obtain capability information of each RAN MF, where the capability information includes information about whether scenario-based cell deletion can be performed. The RAN MS user can send the first message to the first RAN MF only when determining that the first RAN MF has a scenario-based cell deletion capability. The scenario-based cell deletion may also be referred to as intention-based cell deletion.

402: The first RAN MF deletes the cell based on the first message.

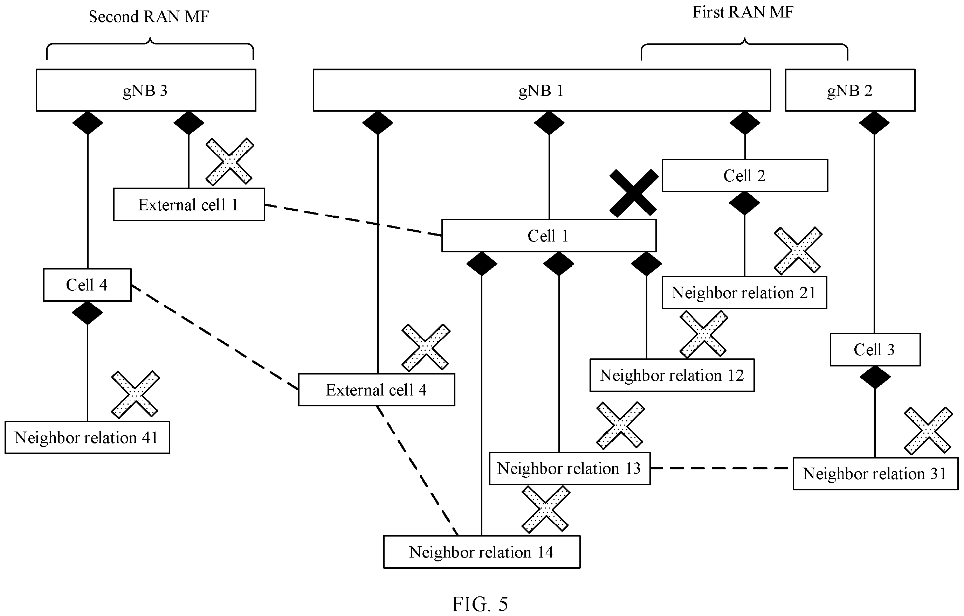

For example, referring to FIG. 5, in FIG. 5, the method provided in Embodiment 1 is described by using an example in which the first RAN MF deletes a cell 1. In FIG. 5, the first RAN MF manages a gNB 1 and a gNB 2, and a second RAN MF manages a gNB 3. The gNB 1 covers the cell 1 and a cell 2, the gNB 2 covers a cell 3, and the gNB 3 covers a cell 4. The cell 1 and the cell 2, and the cell 3 and the cell 4 are neighbor cells. If the first message includes cell information of the cell 1, the first RAN MF deletes the cell 1 based on the first message.

In a specific implementation of step 402, the first RAN MF may delete the cell by deleting the managed object of the cell.

403: The first RAN MF deletes, based on the first message, a neighbor relation and/or an external cell that are/is associated with the cell and that are/is managed by the first RAN MF.

Optionally, the neighbor relation that is associated with the cell and that is managed by the first RAN MF includes a neighbor relation that is of the cell and that is managed by the first RAN MF and/or a neighbor relation that points to the cell and that is managed by the first RAN MF. The external cell that is associated with the cell and that is managed by the first RAN MF includes an external cell pointed to by the neighbor relation that is of the cell and that is managed by the first RAN MF.

For example, referring to FIG. 5, neighbor relations that are of the cell 1 and that are managed by the first RAN MF include a neighbor relation 12, a neighbor relation 13, and a neighbor relation 14. Neighbor relations that point to the cell 1 and that are managed by the first RAN MF include a neighbor relation 21 and a neighbor relation 31. An external cell pointed to by the neighbor relation that is of the cell 1 and that is managed by the first RAN MF is an external cell 4.

For the neighbor relation that is associated with the cell and that is managed by the first RAN MF, step 403 may be implemented in any one of Manner 1 and Manner 2 in a specific implementation.

Manner 1: The first RAN MF may delete the neighbor relation associated with the cell by deleting a managed object of the neighbor relation associated with the cell.

Manner 2: For the neighbor relation that is of the cell and that is managed by the first RAN MF, the first RAN MF may configure a cell, so that the cell does not include information about a neighbor cell, for example, information for deleting the neighbor cell of the cell (specifically, information for deleting a neighbor cell in a managed object of the cell), to delete the neighbor relation of the cell. For the neighbor relation that points to the cell and that is managed by the first RAN MF, the first RAN MF may configure a neighbor cell of the cell managed by the first RAN MF, so that the neighbor cell of the cell does not include cell information of the cell. For example, the cell information that is of the cell and that is managed by the first RAN MF is deleted from (in) the neighbor cell of the cell (specifically, the information of the cell in a managed object of the neighbor cell of the cell may be deleted), to delete the neighbor relation that points to the cell.

It should be noted that, in some scenarios, there may be no managed object of the neighbor relation, but the information about the neighbor cell is configured in the managed object of the cell to indicate the neighbor cell of the cell. In this scenario, Manner 2 may be used to delete the neighbor relation associated with the cell.

Optionally, the first message further carries first indication information, and the first indication information is used to indicate to delete the neighbor relation and/or the external cell that are/is associated with the cell. In this case, in a specific implementation of step 403, the first RAN MF may delete, based on the first indication information in the first message, the neighbor relation and/or the external cell that are/is associated with the cell. In this case, in a specific implementation of step 402, the first RAN MF may delete the cell based on the first indication information in the first message.

According to the method provided in this embodiment of this application, after receiving the first message, a vendor device (for example, the first RAN MF) may delete the cell and the neighbor relation and/or the external cell that are/is associated with the cell. Compared with the prior art, an operator device does not need to send a plurality of messages (for example, a message for deleting the cell, a message for deleting the neighbor relation of the cell, a message for deleting the neighbor relation that points to the cell, and a message for deleting an external cell pointed to by the neighbor relation of the cell) to the vendor device. This can reduce interaction between the operator device and the vendor device, and increase cell deletion efficiency.

In addition, the vendor device may delete the cell based on a workflow or operation logic for cell deletion, and the operator device does not need to execute different operation logic based on the vendor device, to increase cell deletion efficiency. In addition, the operator device does not need to know neighboring information between all cells. This simplifies implementation complexity of the operator device.

Optionally, the method further includes the following steps.

(11) The first RAN MF sends a second message to the second RAN MF. Correspondingly, the second RAN MF receives the second message from the first RAN MF.

The second message carries the cell information, and the second message is used to notify the second RAN MF to delete a neighbor relation and/or an external cell that are/is associated with the cell and that are/is managed by the second RAN MF.

(12) The second RAN MF deletes, based on the second message, the neighbor relation and/or the external cell that are/is associated with the cell and that are/is managed by the second RAN MF.

The second RAN MF is a RAN MF that manages the neighbor cell of the cell. Because there may be a plurality of neighbor cells of the cell, there may also be a plurality of second RAN MFs.

Optionally, the neighbor relation that is associated with the cell and that is managed by the second RAN MF includes a neighbor relation that points to the cell and that is managed by the second RAN MF. The external cell that is associated with the cell and that is managed by the second RAN MF includes an external cell that points to the cell and that is managed by the second RAN MF.

For example, referring to FIG. 5, the neighbor relation that points to the cell 1 and that is managed by the second RAN MF is a neighbor relation 41, and the external cell that points to the cell 1 and that is managed by the second RAN MF is an external cell 1.

Step (12) may include step (12-1) and/or step (12-2) in a specific implementation. Step (12-1) is: The second RAN MF deletes, based on the second message, the neighbor relation that points to the cell and that is managed by the second RAN MF. Step (12-2) is: The second RAN MF deletes, based on the second message, the external cell that points to the cell and that is managed by the second RAN MF.

In a specific implementation, step (12-1) may be implemented in any one of Manner 3 and Manner 4.

Manner 3: The second RAN MF may delete the neighbor relation that points to the cell by deleting a managed object of the neighbor relation that points to the cell.

Manner 4: The second RAN MF may configure the neighbor cell of the cell managed by the second RAN MF, so that the neighbor cell of the cell does not include the cell information of the cell. For example, the cell information that is of (in) the neighbor cell of the cell and that is managed by the second RAN MF is deleted (specifically, the information of the cell in the managed object of the neighbor cell of the cell may be deleted), to delete the neighbor relation that points to the cell.

It should be noted that, in some scenarios, there may be no managed object of the neighbor relation, but the information about the neighbor relation is configured in the cell to indicate the neighbor relation of the cell. In this scenario, Manner 2 may be used to delete the neighbor relation that points to the cell.

Optionally, the second message further carries second indication information, and the second indication information is used to indicate to delete the neighbor relation and/or the external cell that are/is associated with the cell. In this case, in a specific implementation of step (12), the second RAN MF may delete, based on the second indication information in the second message, the neighbor relation and/or the external cell that are/is associated with the cell and that are/is managed by the second RAN MF.

Optionally, the method may further include: The second RAN MF sends a fourth message to the first RAN MF. Correspondingly, the first RAN MF receives the fourth message from the second RAN MF. The fourth message is used to notify the first RAN MF whether the second RAN MF successfully deletes the neighbor relation and/or the external cell that are/is associated with the cell and that are/is managed by the second RAN MF. Specifically, the fourth message may include fourth indication information, and the fourth indication information is used to indicate whether the second RAN MF successfully deletes the neighbor relation and/or the external cell that are/is associated with the cell and that are/is managed by the second RAN MF.

Optionally, the method further includes: The first RAN MF sends a third message, where the third message carries third indication information, and the third indication information is used to indicate that the neighbor relation and/or the external cell that are/is associated with the cell are/is deleted.

The third indication information may be used to indicate that the neighbor relation and/or the external cell that are/is associated with the cell and that are/is managed by the first RAN MF are/is deleted. In this case, the first RAN MF may send the third message after the neighbor relation and/or the external cell that are/is associated with the cell and that are/is managed by the first RAN MF are/is deleted.

The third indication information may also specifically indicate a neighbor relation and/or an external cell that are/is associated with the cell and that are/is managed by a RAN MF are/is deleted. In this case, the first RAN MF may include, in the third message, information about the RAN MF that deletes the neighbor relation and/or the external cell that are/is associated with the cell.

The third indication information may further indicate that all neighbor relations and/or external cells that are associated with the cell and that are managed by all RAN MFs are deleted. In this case, the first RAN MF may send the third message after the neighbor relations and/or external cells that are associated with the cell and that are managed by the first RAN MF and all the second RAN MFs are deleted.

Specifically, the first RAN MF may send the third message to the RAN MS user.

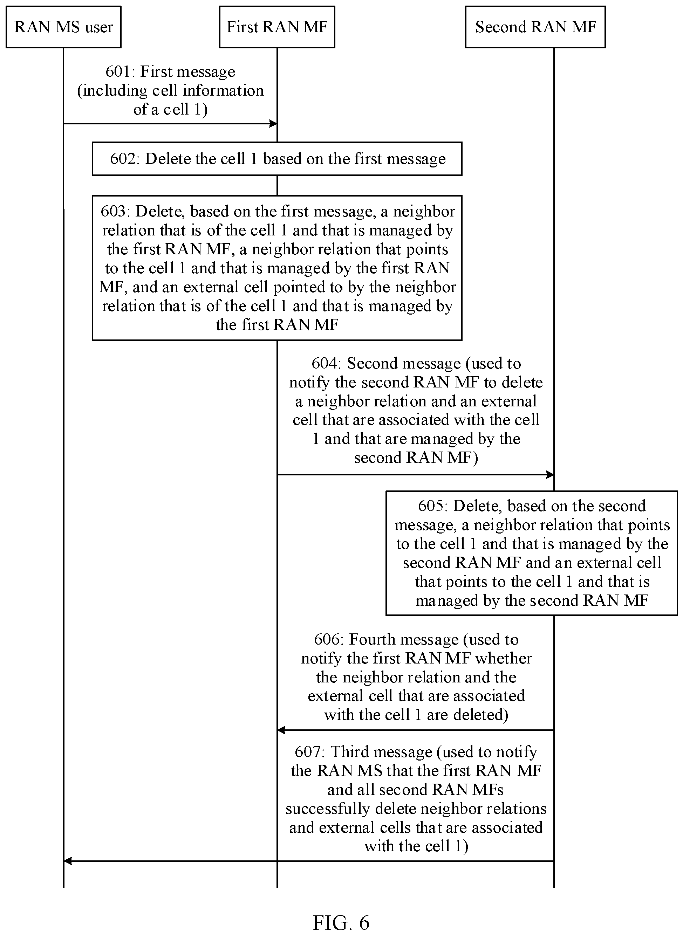

To make an implementation procedure of Embodiment 1 clearer, the following describes the implementation procedure of Embodiment 1 by using a procedure shown in FIG. 6 as an example. In this example, deleting the cell 1 shown in FIG. 5 is used for description. As shown in FIG. 6, the method includes the following steps.

601: The RAN MS user determines that the cell 1 needs to be deleted, and sends the first message to the first RAN MF that manages the cell 1.

The first message includes the cell information of the cell 1 (for example, an identifier of the cell 1 or an identifier of a managed object of the cell 1), and may further include information about the gNB 1 to which the cell 1 belongs (for example, an identifier of the gNB 1 or an identifier of a managed object of the gNB 1), and/or the first indication information. The first indication information is used to indicate to delete a neighbor relation and/or an external cell that are/is associated with the cell 1.

Before sending the first message to the first RAN MF, the RAN MS user may further obtain capability information of the first RAN MF, and determine that the first RAN MF has a cell deletion capability.

602: The first RAN MF deletes the cell 1 based on the first message.

When the first message further includes the first indication information, in a specific implementation, step 602 may include: The first RAN MF deletes the cell 1 based on the first indication information in the first message.

603: The first RAN MF deletes, based on the first message, neighbor relations (namely, the neighbor relation 12, the neighbor relation 13, and the neighbor relation 14) that are of the cell 1 and that are managed by the first RAN MF, neighbor relations (namely, the neighbor relation 21 and the neighbor relation 31) that point to the cell 1 and that is managed by the first RAN MF, and the external cell (namely, the external cell 4) pointed to by the neighbor relation that is of the cell 1 and that is managed by the first RAN MF.

When the first message further includes the first indication information, in a specific implementation, step 603 may include: The first RAN MF deletes the neighbor relation 12, the neighbor relation 13, the neighbor relation 14, the neighbor relation 21, the neighbor relation 31, and the external cell 4 based on the first indication information in the first message.

604: The first RAN MF sends the second message to the second RAN MF, where the second message is used to notify the second RAN MF to delete a neighbor relation and an external cell that are associated with the cell 1 and that are managed by the second RAN MF.

The second message carries the cell information of the cell 1, and may further include the second indication information. The second indication information is used to indicate to delete the neighbor relation and/or the external cell that are/is associated with the cell 1.

The second RAN MF may be a RAN MF that manages a neighbor cell of the cell 1. Because there may be a plurality of neighbor cells of the cell 1, there may also be a plurality of second RAN MFs. The first RAN MF may send a second message to each of the plurality of second RAN MFs.

605: The second RAN MF deletes, based on the second message, the neighbor relation (namely, the neighbor relation 41) that points to the cell 1 and that is managed by the second RAN MF, and the external cell (namely, the external cell 1) that points to the cell 1 and that is managed by the second RAN MF.

When the second message includes the second indication information, the second RAN MF may delete the neighbor relation 41 and the external cell 1 based on the second indication information in the second message.

606: The second RAN MF sends the fourth message to the first RAN MF, where the fourth message is used to notify the first RAN MF whether the neighbor relation and the external cell that are associated with the cell 1 are deleted.

Specifically, the fourth message may include the fourth indication information, and the fourth indication information is used to indicate whether the second RAN MF successfully deletes the neighbor relation and the external cell that are associated with the cell 1 and that are managed by the second RAN MF.

If the second RAN MF fails to delete the neighbor relation and the external cell that are associated with the cell 1 and that are managed by the second RAN MF, the first RAN MF may request the second RAN MF again to delete the neighbor relation and the external cell that are associated with the cell 1.

607: The first RAN MF sends the third message to the RAN MS user, where the third message is used to notify the RAN MS user that the first RAN MF and all the second RAN MFs successfully delete the neighbor relations and the external cells that are associated with the cell 1.

### Embodiment 2

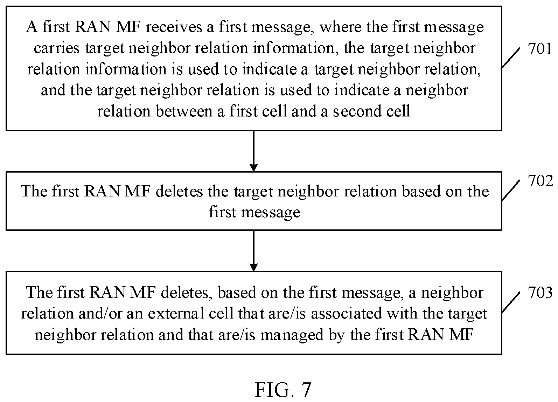

This embodiment provides a neighbor relation deletion method. As shown in FIG. 7, the method includes the following steps.

701: A first RAN MF receives a first message, where the first message carries target neighbor relation information. The target neighbor relation information is used to indicate a target neighbor relation, the target neighbor relation is used to indicate a neighbor relation between a first cell and a second cell, and the target neighbor relation is a neighbor relation of the first cell (in other words, a source cell of the target neighbor relation is the first cell).

The first message may also be referred to as a neighbor relation deletion message, a cell scenario-based configuration request, an intention-based neighbor relation deletion request, or the like.

The target neighbor relation information includes information used to indicate the first cell (for example, an identifier of the first cell or an identifier of a managed object of the first cell) and information used to indicate the second cell (for example, an identifier of the second cell or an identifier of a managed object of the second cell), or the target neighbor relation information includes an identifier of the target neighbor relation. The first RAN MF is a RAN MF that manages the first cell.

In some cases, an identifier of a neighbor relation may uniquely determine a neighbor relation. In other cases, the identifier of the neighbor relation cannot uniquely determine a neighbor relation. In this case, when the target neighbor relation information includes the identifier of the target neighbor relation, the target neighbor relation information may further include the information used to indicate the first cell (for example, the identifier of the first cell or the identifier of the managed object of the first cell) and/or information used to indicate a base station to which the first cell belongs (for example, an identifier of the base station or an identifier of a managed object of the base station).

In a specific implementation of step 701, the first RAN MF may receive the first message from a RAN MS user. In this case, before step 701, the method may further include: The RAN MS user sends the first message to the first RAN MF. Before sending the first message, the RAN MS user may obtain capability information of each RAN MF, where the capability information includes information about whether scenario-based neighbor relation deletion can be performed. The RAN MS user can send the first message to the first RAN MF only when determining that the first RAN MF has a scenario-based neighbor relation deletion capability. The scenario-based neighbor relation deletion may also be referred to as intention-based neighbor relation deletion.

702: The first RAN MF deletes the target neighbor relation based on the first message.

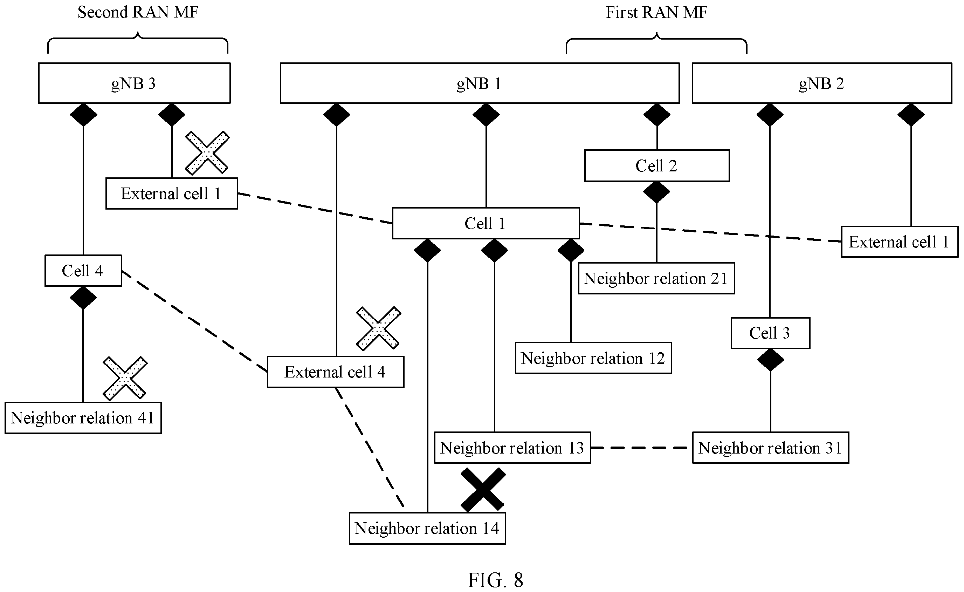

For example, in FIG. 8, the first RAN MF manages a gNB 1 and a gNB 2, and a second RAN MF manages a gNB 3. The gNB 1 covers a cell 1 and a cell 2, the gNB 2 covers a cell 3, and the gNB 3 covers a cell 4. The cell 1 and the cell 2, and the cell 3 and the cell 4 are neighbor cells. If the first message includes information about a neighbor relation 14 (to be specific, the target neighbor relation is the neighbor relation 14, the first cell is the cell 1, and the second cell is the cell 4), the first RAN MF deletes the neighbor relation 14 based on the first message.

In a specific implementation, step 702 may be implemented in any one of Manner 1 and Manner 2.

Manner 1: The first RAN MF may delete the target neighbor relation by deleting a managed object of the target neighbor relation.

Manner 2: The first RAN MF may configure the first cell, so that the first cell does not include the information about the second cell. For example, the information about the second cell of (in) the first cell is deleted (specifically, the information about the second cell in the managed object of the first cell may be deleted), to delete the target neighbor relation.

It should be noted that, in some scenarios, there may be no managed object of the neighbor relation, but information about a neighbor cell is configured in a managed object of a cell to indicate the neighbor cell of the cell. In this scenario, Manner 2 may be used to delete the neighbor relation.

703: The first RAN MF deletes, based on the first message, a neighbor relation and/or an external cell that are/is associated with the target neighbor relation and that are/is managed by the first RAN MF.

Optionally, the neighbor relation that is associated with the target neighbor relation and that is managed by the first RAN MF includes a first neighbor relation that is of the second cell and that is managed by the first RAN MF. The first neighbor relation is a neighbor relation that points to the first cell. The external cell that is associated with the target neighbor relation and that is managed by the first RAN MF includes an external cell that points to the second cell and that is managed by the first RAN MF, and/or an external cell that points to the first cell and that is managed by the first RAN MF.

It should be noted that, only when the first RAN MF manages the second cell, the neighbor relation that is associated with the target neighbor relation and that is managed by the first RAN MF can include the first neighbor relation that is of the second cell and that is managed by the first RAN MF, and the external cell that is associated with the target neighbor relation and that is managed by the first RAN MF can include the external cell that points to the first cell and that is managed by the first RAN MF.

For example, referring to FIG. 8, if the target neighbor relation is the neighbor relation 14, the external cell that points to the second cell and that is managed by the first RAN MF is an external cell 4, and the external cell that points to the first cell and that is managed by the first RAN MF is an external cell 1 in the gNB 2. In this case, the first neighbor relation that is of the second cell and that is managed by the first RAN MF does not exist. If the target neighbor relation is a neighbor relation 13, the first neighbor relation that is of the second cell and that is managed by the first RAN MF is a neighbor relation 31, and the external cell that points to the first cell and that is managed by the first RAN MF is the external cell 1 in the gNB 2. In this case, the external cell that points to the second cell and that is managed by the first RAN MF does not exist.

For the first neighbor relation that is of the second cell and that is managed by the first RAN MF, step 703 may be implemented in any one of Manner 3 and Manner 4 in a specific implementation.

Manner 3: The first RAN MF may delete the first neighbor relation of the second cell by deleting a managed object of the first neighbor relation of the second cell.

Manner 4: The first RAN MF may configure the second cell, so that the second cell does not include the information about the first cell. For example, the information about the first cell of (in) the second cell is deleted (specifically, the information about the first cell in the managed object of the second cell may be deleted), to delete the first neighbor relation of the second cell.

It should be noted that, in some scenarios, there may be no managed object of the neighbor relation, but the information about the neighbor cell is configured in the managed object of the cell to indicate the neighbor cell of the cell. In this scenario, Manner 2 may be used to delete the first neighbor relation of the second cell.

Optionally, before the first RAN MF deletes, based on the first message, the external cell that points to the second cell and that is managed by the first RAN MF, the method may further include: The first RAN MF determines that the neighbor relation managed by the first RAN MF does not include a neighbor relation that points to the second cell. Before the first RAN MF deletes, based on the first message, the external cell that points to the first cell and that is managed by the first RAN MF, the method may further include: The first RAN MF determines that the neighbor relation managed by the first RAN MF does not include the neighbor relation that points to the first cell. Optionally, according to the method, it can be ensured that the external cell is deleted when another cell does not uses the external cell, to ensure normal handover and communication of a terminal.

Optionally, the first message further carries first indication information, and the first indication information is used to indicate to delete the neighbor relation and/or the external cell that are/is associated with the target neighbor relation. In this case, in a specific implementation of step 703, the first RAN MF may delete, based on the first indication information in the first message, the neighbor relation and/or the external cell that are/is associated with the target neighbor relation and that are/is managed by the first RAN MF. In this case, in a specific implementation of step 702, the first RAN MF may delete the target neighbor relation based on the first indication information in the first message.

According to the method provided in this embodiment of this application, after receiving the first message, a vendor device (for example, the first RAN MF) may delete the target neighbor relation and the neighbor relation and/or the external cell that are/is associated with the target neighbor relation. Compared with the prior art, an operator device does not need to send a plurality of messages (for example, a message for deleting the target neighbor relation and a message for deleting the first neighbor relation of the second cell) to the vendor device. This can reduce interaction between the operator device and the vendor device, and increase neighbor relation deletion efficiency.

In addition, the vendor device may delete the neighbor relation based on a workflow or operation logic for neighbor relation deletion, and the operator device does not need to execute different operation logic based on the vendor device, to increase the neighbor relation deletion efficiency. In addition, the operator device does not need to know neighboring information between all cells. This simplifies implementation complexity of the operator device.

Optionally, the method further includes the following steps.

(11) The first RAN MF sends a second message to the second RAN MF. Correspondingly, the second RAN MF receives the second message from the first RAN MF.

The second message carries the target neighbor relation information, and the second message is used to notify the second RAN MF to delete a neighbor relation and/or an external cell that are/is associated with the target neighbor relation and that are/is managed by the second RAN MF.

(12) The second RAN MF deletes, based on the second message, the neighbor relation and/or the external cell that are/is associated with the target neighbor relation and that are/is managed by the second RAN MF.

The second RAN MF is a RAN MF that manages the second cell. If there is one target neighbor relation, there is also one second RAN MF. If there are a plurality of target neighbor relations, there may be a plurality of second RAN MFs. It should be noted that when the first RAN MF is a RAN MF that manages the second cell, optionally, the method is not performed.

Optionally, the neighbor relation that is associated with the target neighbor relation and that is managed by the second RAN MF includes a first neighbor relation that is of the second cell and that is managed by the second RAN MF. The external cell that is associated with the target neighbor relation and that is managed by the second RAN MF includes an external cell that points to the first cell and that is managed by the second RAN MF.

For example, referring to FIG. 8, if the target neighbor relation is the neighbor relation 14, the first neighbor relation that is of the second cell and that is managed by the second RAN MF is a neighbor relation 41, and the external cell that points to the first cell and that is managed by the second RAN MF is an external cell 1 in the gNB 3.

Step (12) may include step (12-1) and/or step (12-2) in a specific implementation. Step (12-1) is: The second RAN MF deletes, based on the second message, the first neighbor relation that is of the second cell and that is managed by the second RAN MF. Step (12-2) is: The second RAN MF deletes, based on the second message, the external cell that points to the first cell and that is managed by the second RAN MF.

For a specific implementation of step (12-1), refer to Manner 3 and Manner 4. A difference lies in that an execution body herein is the second RAN MF.

Before step (12-2), the method may further include: The second RAN MF determines that the neighbor relation managed by the second RAN MF does not include the neighbor relation that points to the first cell. Optionally, according to the method, it can be ensured that the external cell is deleted when another cell does not uses the external cell, to ensure the normal handover and the communication of the terminal.

Optionally, the second message further carries second indication information, and the second indication information is used to indicate to delete the neighbor relation and/or the external cell that are/is associated with the target neighbor relation. In this case, in a specific implementation of step (12), the second RAN MF may delete, based on the second indication information in the second message, the neighbor relation and/or the external cell that are/is associated with the target neighbor relation.

Optionally, the method may further include: The second RAN MF sends a fourth message to the first RAN MF. Correspondingly, the first RAN MF receives the fourth message from the second RAN MF. The fourth message is used to notify the first RAN MF whether the second RAN MF successfully deletes the neighbor relation and/or the external cell that are/is associated with the target neighbor relation and that are/is managed by the second RAN MF. Specifically, the fourth message may include fourth indication information, and the fourth indication information is used to indicate whether the second RAN MF successfully deletes the neighbor relation and/or the external cell that are/is associated with the target neighbor relation and that are/is managed by the second RAN MF.

Optionally, the method further includes: The first RAN MF sends a third message, where the third message carries third indication information, and the third indication information is used to indicate that the neighbor relation and/or the external cell that are/is associated with the target neighbor relation are/is deleted.

The third indication information may be used to indicate that the neighbor relation and/or the external cell that are/is associated with the target neighbor relation and that are/is managed by the first RAN MF are/is deleted. In this case, the first RAN MF may send the third message after the neighbor relation and/or the external cell that are/is associated with the target neighbor relation and that are/is managed by the first RAN MF are/is deleted.

The third indication information may also specifically indicate a neighbor relation and/or an external cell that are/is associated with the target neighbor relation and that are/is managed by a RAN MF are/is deleted. In this case, the first RAN MF may include, in the third message, information about the RAN MF that deletes the neighbor relation and/or the external cell that are/is associated with the target neighbor relation.

The third indication information may further indicate that all neighbor relations and/or external cells that are associated with the target neighbor relation and that are managed by all RAN MFs are deleted. In this case, the first RAN MF may send the third message after neighbor relations and/or external cells that are associated with the target neighbor relation and that are managed by the first RAN MF and all the second RAN MFs are deleted.

Specifically, the first RAN MF may send the third message to the RAN MS user.

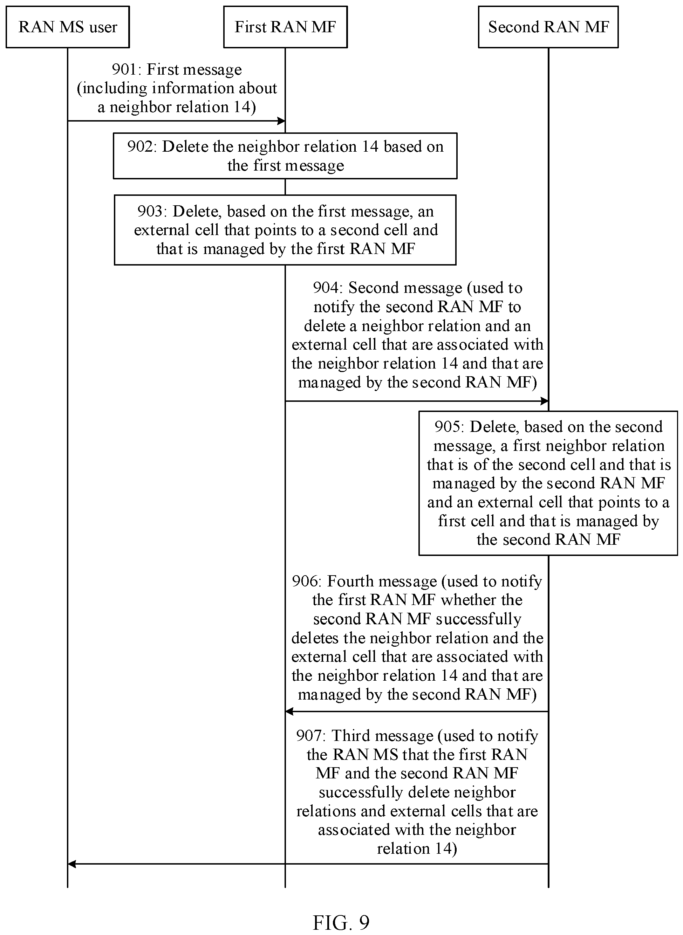

To make an implementation procedure of Embodiment 2 clearer, the following describes the implementation procedure of Embodiment 2 by using a procedure shown in FIG. 9 as an example. In this example, deleting the neighbor relation 14 shown in FIG. 8 is used as an example for description. As shown in FIG. 9, the method includes the following steps.

901: The RAN MS user determines that the neighbor relation 14 needs to be deleted, and sends the first message to the first RAN MF that manages the cell 1.

The first message includes the information about the neighbor relation 14, and may further include the first indication information. The first indication information is used to indicate to delete a neighbor relation and an external cell that are associated with the neighbor relation 14.

Before sending the first message to the first RAN MF, the RAN MS user may further obtain capability information of the first RAN MF, and determine that the first RAN MF has a neighbor relation deletion capability.

902: The first RAN MF deletes the neighbor relation 14 based on the first message.

When the first message includes the first indication information, in a specific implementation, step 902 may include: The first RAN MF deletes the neighbor relation 14 based on the first indication information in the first message.

903: The first RAN MF deletes, based on the first message, the external cell (namely, the external cell 4) that points to the second cell and that is managed by the first RAN MF.

When the first message includes the first indication information, in a specific implementation, step 903 may include: The first RAN MF deletes the external cell 4 based on the first indication information in the first message.

Further, when determining that the managed neighbor relation does not include the neighbor relation that points to the cell 4, the first RAN MF may delete the external cell 4 based on the first message.

904: The first RAN MF sends the second message to the second RAN MF, where the second message is used to notify the second RAN MF to delete the neighbor relation and the external cell that are associated with the neighbor relation 14 and that are managed by the second RAN MF.

The second message carries cell information of the neighbor relation 14, and may further include the second indication information. The second indication information is used to indicate to delete the neighbor relation and the external cell that are associated with the neighbor relation 14.

The second RAN MF is a RAN MF that manages the cell 4.

905: The second RAN MF deletes, based on the second message, the first neighbor relation (namely, the neighbor relation 41) that is of the second cell and that is managed by the second RAN MF and the external cell (namely, the external cell 1) that points to the first cell and that is managed by the second RAN MF.

When the second message includes the second indication information, in a specific implementation, step 905 may include: The second RAN MF deletes the neighbor relation 41 and the external cell 1 based on the second indication information in the second message.

Further, when determining that the managed neighbor relation does not include a neighbor relation that points to the cell 1, the second RAN MF may delete the external cell 1 based on the first message.

906: The second RAN MF sends the fourth message to the first RAN MF, where the fourth message is used to notify the first RAN MF whether the second RAN MF successfully deletes the neighbor relation and the external cell that are associated with the neighbor relation 14 and that are managed by the second RAN MF.

Specifically, the fourth message may include the fourth indication information, and the fourth indication information is used to indicate whether the second RAN MF successfully deletes the neighbor relation and the external cell that are associated with the neighbor relation 14 and that are managed by the second RAN MF.

If the second RAN MF fails to delete the neighbor relation and the external cell that are associated with the neighbor relation 14 and that are managed by the second RAN MF, the first RAN MF may request the second RAN MF again to delete the neighbor relation and the external cell that are associated with the neighbor relation 14.

907: The first RAN MF sends the third message to the RAN MS user, where the third message is used to notify the RAN MS user that the first RAN MF and the second RAN MF successfully delete the neighbor relation and the external cell that are associated with the neighbor relation 14.

In Embodiment 1 and Embodiment 2, the cell may be any one of the following cells: an evolved universal terrestrial radio access network (evolved universal terrestrial radio access network, EUTRAN for short) cell (which may also be referred to as an LTE cell or a 4G cell), an NR cell (which may also be referred to as a 5G cell), an NR cell centralized unit (centralized unit, CU for short) (which may also be referred to as a 5G cell CU), and an NR cell distributed unit (distributed unit, DU for short) (which may also be referred to as a 5G cell DU).

The identifier of the managed object of the cell may be a cell managed object instance (managed object instance, MOI for short) identifier (ID) or a distinguished name (distinguish name) of the managed object of the cell. The cell MOI may also be referred to as an instance of a cell information object class (information object class, IOC for short) (instance of cell IOC). The identifier of the managed object of the cell is used to uniquely identify the managed object of the cell. The managed object of the cell is used to describe information about the cell.

When the cell is the EUTRAN cell, the identifier of the cell may be a local cell identifier (cell local ID), an EUTRAN cell global identifier (EUTRAN cell global ID, ECGI for short), or an EUTRAN cell identifier (EUTRAN cell ID, ECI for short).

When the cell is the NR cell, the NR cell CU, or the NR cell DU, the identifier of the cell may be an NR cell global identifier (NR cell global ID, NCGI for short) or an NR cell identifier (NR cell ID, NCI for short).

When the cell is the EUTRAN cell, the base station may be an evolved NodeB (evolved node base station, eNB for short).

When the cell is the NR cell, the base station may be a gNB.

When the cell is the NR cell CU, the base station may be a gNB, a gNB CU, or a gNB CU control plane (control plane).

When the cell is the NR cell DU, the base station may be a gNB or a gNB DU.

The identifier of the managed object of the base station may be an MOI identifier of the base station or a distinguished name of the managed object of the base station. The base station MOI may also be referred to as a base station IOC instance. The identifier of the managed object of the base station is used to uniquely identify the managed object of the base station.

The identifier of the base station is used to uniquely identify the base station.

The eNB, gNB, gNB CU, gNB CU CP and the gNB DU may also be respectively referred to as an eNB function (Function), a gNB function, a gNB CU function, a gNB CU CP function, and a gNB DU function.

The foregoing mainly describes the solutions in the embodiments of this application from a perspective of methods. It may be understood that, to implement the foregoing functions, each network element, for example, the first RAN MF or the second RAN MF includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the first RAN MF or the second RAN MF may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that, in the embodiments of this application, division into the units is an example, and is merely logical function division. In an actual implementation, another division manner may be used.

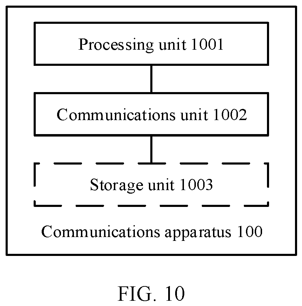

When the integrated unit is used, FIG. 10 is a possible schematic structural diagram of the communications apparatus 100 in the foregoing embodiments. The communications apparatus 100 includes a processing unit 1001 and a communications unit 1002, and may further include a storage unit 1003. The schematic structural diagram shown in FIG. 10 may be used to illustrate the first RAN MF or the second RAN MF in the foregoing embodiments.

When the schematic structural diagram shown in FIG. 10 is used to illustrate a structure of the first RAN MF in the foregoing embodiments, the processing unit 1001 is configured to control and manage an action of the first RAN MF. For example, the processing unit 1001 is configured to support the first RAN MF in performing steps 401 to 403 in FIG. 4, steps 601 to 604 and 606 in FIG. 6, steps 701 to 703 in FIG. 7, steps 901 to 904 and 906 in FIG. 9, and/or an action performed by the first RAN MF in another process described in the embodiments of this application. The communications unit 1002 is configured to support the first RAN MF in communicating with another network entity, for example, communicating with the second RAN MF shown in FIG. 6. The storage unit 1003 is configured to store program code and data of the first RAN MF.

When the schematic structural diagram shown in FIG. 10 is used to illustrate a structure of the second RAN MF in the foregoing embodiments, the processing unit 1001 is configured to control and manage an action of the second RAN MF. For example, the processing unit 1001 is configured to support the second RAN MF in performing steps 604 to 607 in FIG. 6, steps 904 to 907 in FIG. 9, and/or an action performed by the second RAN MF in another process described in the embodiments of this application. The communications unit 1002 is configured to support the second RAN MF in communicating with another network entity, for example, communicating with the first RAN MF shown in FIG. 6. The storage unit 1003 is configured to store program code and data of the second RAN MF.

The processing unit 1001 may be a processor or a controller. The communications unit 1002 may be a communications interface, a transceiver, a transceiver circuit, or the like. The communications interface is a general term and may include one or more interfaces. The storage unit 1003 may be a memory. When the processing unit 1001 is a processor, the communications unit 1002 is a communications interface, and the storage unit 1003 is a memory, the communications apparatus 100 in this embodiment of this application may be the communications apparatus 30 shown in FIG. 3.

In this case, when the schematic structural diagram shown in FIG. 3 is used to illustrate a structure of the first RAN MF in the foregoing embodiments, the processor 301 is configured to control and manage an action of the first RAN MF. For example, the processor 301 is configured to support the first RAN MF in performing steps 401 to 403 in FIG. 4, steps 601 to 604 and 606 in FIG. 6, steps 701 to 703 in FIG. 7, steps 901 to 904 and 906 in FIG. 9, and/or an action performed by the first RAN MF in another process described in the embodiments of this application. The communications interface 302 is configured to support the first RAN MF in communicating with another network entity, for example, communicating with the second RAN MF shown in FIG. 6. The memory 303 is configured to store program code and data of the first RAN MF.

When the schematic structural diagram shown in FIG. 3 is used to illustrate a structure of the second RAN MF in the foregoing embodiments, the processor 301 is configured to control and manage an action of the second RAN MF. For example, the processor 301 is configured to support the second RAN MF in performing steps 604 to 607 in FIG. 6, steps 904 to 907 in FIG. 9, and/or an action performed by the second RAN MF in another process described in the embodiments of this application. The communications interface 302 is configured to support the second RAN MF in communicating with another network entity, for example, communicating with the first RAN MF shown in FIG. 6. The memory 303 is configured to store program code and data of the second RAN MF.

An embodiment of this application further provides a computer-readable storage medium, including instructions. When the instructions is run on a computer, the computer is enabled to perform the foregoing methods.

An embodiment of this application further provides a computer program product including instructions. When the computer program product runs on a computer, the computer is enabled to perform the foregoing methods.

An embodiment of this application further provides a communications system, including the first RAN MF and the second RAN MF.

All or some of the foregoing embodiments may be implemented by using software, hardware, firmware, or any combination thereof. When a software program is used to implement the embodiments, the embodiments may be implemented entirely or partially in a form of a computer program product. The computer program product includes one or more computer instructions. When the computer program instructions are loaded and executed on the computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely examples for description of this application defined by the appended claims, and are considered as any or all of modifications, variations, combinations, or equivalents that cover the scope of this application. Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A cell deletion method, comprising:
receiving, by a first base station management unit, a first message, wherein the first message carries cell information, and the cell information comprises an identifier of a cell or an identifier of a managed object of the cell;
deleting, by the first base station management unit, the cell based on the first message; and
deleting, by the first base station management unit based on the first message, a neighbor relation and/or an external cell that are/is associated with the cell and that are/is managed by the first base station management unit.

2. The method according to claim 1, wherein the first message further carries first indication information, and the first indication information is used to indicate to delete the neighbor relation and/or the external cell that are/is associated with the cell.

3. The method according to claim 1 or 2, wherein the neighbor relation that is associated with the cell and that is managed by the first base station management unit comprises a neighbor relation that is of the cell and that is managed by the first base station management unit and/or a neighbor relation that points to the cell and that is managed by the first base station management unit, and the external cell that is associated with the cell and that is managed by the first base station management unit comprises an external cell pointed to by the neighbor relation that is of the cell and that is managed by the first base station management unit.

4. The method according to any one of claims 1 to 3, wherein the neighbor relation that is associated with the cell and that is managed by the first base station management unit comprises the neighbor relation that points to the cell and that is managed by the first base station management unit; and the deleting, by the first base station management unit based on the first message, a neighbor relation that is associated with the cell and that is managed by the first base station management unit comprises:
deleting, by the first base station management unit based on the first message, the cell information that is of a neighbor cell of the cell and that is managed by the first base station management unit.

5. The method according to any one of claims 1 to 4, wherein the method further comprises:
sending, by the first base station management unit, a second message to a second base station management unit, wherein the second message carries the cell information, and the second message is used to notify the second base station management unit to delete a neighbor relation and/or an external cell that are/is associated with the cell and that are/is managed by the second base station management unit.

6. The method according to claim 5, wherein the second message further carries second indication information, and the second indication information is used to indicate to delete the neighbor relation and/or the external cell that are/is associated with the cell.

7. The method according to claim 5 or 6, wherein the neighbor relation that is associated with the cell and that is managed by the second base station management unit comprises a neighbor relation that points to the cell and that is managed by the second base station management unit, and the external cell that is associated with the cell and that is managed by the second base station management unit comprises an external cell that points to the cell and that is managed by the second base station management unit.

8. The method according to any one of claims 1 to 7, wherein the cell information further comprises an identifier of a base station to which the cell belongs or an identifier of a managed object of the base station to which the cell belongs.

9. The method according to any one of claims 1 to 8, wherein the method further comprises:
sending, by the first base station management unit, a third message, wherein the third message carries third indication information, and the third indication information is used to indicate that the neighbor relation and/or the external cell that are/is associated with the cell are/is deleted.

10. A cell deletion method, comprising:
receiving, by a second base station management unit, a second message from a first base station management unit, wherein the second message carries cell information, and the cell information comprises an identifier of a cell or an identifier of a managed object of the cell; and
deleting, by the second base station management unit based on the second message, a neighbor relation and/or an external cell that are/is associated with the cell and that are/is managed by the second base station management unit.

11. The method according to claim 10, wherein the second message further carries second indication information, and the second indication information is used to indicate to delete the neighbor relation and/or the external cell that are/is associated with the cell.

12. The method according to claim 10 or 11, wherein the deleting, by the second base station management unit based on the second message, a neighbor relation and/or an external cell that are/is associated with the cell and that are/is managed by the second base station management unit comprises:
deleting, by the second base station management unit based on the second message, a neighbor relation that points to the cell and that is managed by the second base station management unit; and/or
deleting, by the second base station management unit based on the second message, an external cell that points to the cell and that is managed by the second base station management unit.

13. The method according to claim 12, wherein the deleting, by the second base station management unit based on the second message, a neighbor relation that points to the cell and that is managed by the second base station management unit comprises:
deleting, by the second base station management unit based on the second message, the cell information that is of a neighbor cell of the cell and that is managed by the second base station management unit.

14. The method according to any one of claims 10 to 13, wherein the cell information further comprises an identifier of a base station to which the cell belongs or an identifier of a managed object of the base station to which the cell belongs.

15. A cell deletion apparatus, comprising a communications unit and a processing unit, wherein
the communications unit is configured to receive a first message, wherein the first message carries cell information, and the cell information comprises an identifier of a cell or an identifier of a managed object of the cell;
the processing unit is configured to delete the cell based on the first message; and
the processing unit is further configured to delete, based on the first message, a neighbor relation and/or an external cell that are/is associated with the cell and that are/is managed by the apparatus.

16. The apparatus according to claim 15, wherein the first message further carries first indication information, and the first indication information is used to indicate to delete the neighbor relation and/or the external cell that are/is associated with the cell.

17. The apparatus according to claim 15 or 16, wherein the neighbor relation that is associated with the cell and that is managed by the apparatus comprises a neighbor relation that is of the cell and that is managed by the apparatus and/or a neighbor relation that points to the cell and that is managed by the apparatus, and the external cell that is associated with the cell and that is managed by the apparatus comprises an external cell pointed to by the neighbor relation that is of the cell and that is managed by the apparatus.

18. The apparatus according to any one of claims 15 to 17, wherein the neighbor relation that is associated with the cell and that is managed by the apparatus comprises the neighbor relation that points to the cell and that is managed by the apparatus, and the processing unit is specifically configured to:
delete, based on the first message, the cell information that is of a neighbor cell of the cell and that is managed by the apparatus.

19. The apparatus according to any one of claims 15 to 18, wherein the apparatus further comprises:
the communications unit is further configured to send a second message to a second base station management unit, wherein the second message carries the cell information, and the second message is used to notify the second base station management unit to delete a neighbor relation and/or an external cell that are/is associated with the cell and that are/is managed by the second base station management unit.

20. The apparatus according to claim 19, wherein the second message further carries second indication information, and the second indication information is used to indicate to delete the neighbor relation and/or the external cell that are/is associated with the cell.

21. The apparatus according to claim 19 or 20, wherein the neighbor relation that is associated with the cell and that is managed by the second base station management unit comprises a neighbor relation that points to the cell and that is managed by the second base station management unit, and the external cell that is associated with the cell and that is managed by the second base station management unit comprises an external cell that points to the cell and that is managed by the second base station management unit.

22. The apparatus according to any one of claims 15 to 21, wherein the cell information further comprises an identifier of a base station to which the cell belongs or an identifier of a managed object of the base station to which the cell belongs.

23. The apparatus according to any one of claims 15 to 22, wherein the apparatus further comprises:
the communications unit is further configured to send a third message, wherein the third message carries third indication information, and the third indication information is used to indicate that the neighbor relation and/or the external cell that are/is associated with the cell are/is deleted.

24. A cell deletion apparatus, comprising a communications unit and a processing unit, wherein
the communications unit is configured to receive a second message from a first base station management unit, wherein the second message carries cell information, and the cell information comprises an identifier of a cell or an identifier of a managed object of the cell; and
the processing unit is configured to delete, based on the second message, a neighbor relation and/or an external cell that are/is associated with the cell and that are/is managed by the apparatus.

25. The apparatus according to claim 24, wherein the second message further carries second indication information, and the second indication information is used to indicate to delete the neighbor relation and/or the external cell that are/is associated with the cell.

26. The apparatus according to claim 24 or 25, wherein the processing unit is specifically configured to:
delete, based on the second message, a neighbor relation that points to the cell and that is managed by the apparatus; and/or
delete, based on the second message, an external cell that points to the cell and that is managed by the apparatus.

27. The apparatus according to claim 26, wherein
the processing unit is specifically configured to delete, based on the second message, the cell information that is of a neighbor cell of the cell and that is managed by the apparatus.

28. The apparatus according to any one of claims 24 to 27, wherein the cell information further comprises an identifier of a base station to which the cell belongs or an identifier of a managed object of the base station to which the cell belongs.

29. A cell deletion apparatus, comprising a memory and a processor, wherein
the memory is configured to store computer-executable instructions, and the processor executes the computer-executable instructions stored in the memory, to enable the apparatus to implement the method according to any one of claims 1 to 9.

30. A cell deletion apparatus, comprising a memory and a processor, wherein
the memory is configured to store computer-executable instructions, and the processor executes the computer-executable instructions stored in the memory, to enable the apparatus to implement the method according to any one of claims 10 to 14.
